# EUROPÄISCHE PATENTSCHRIFT

(11) **EP 2 935 422 B1**
(45) Veröffentlichungstag und Bekanntmachung des Hinweises auf die Patenterteilung: **13.04.2022**
(21) Anmeldenummer: 13811197.6
(22) Anmeldetag: 18.12.2013
(51) Int. Cl.: C08J 7/04, B32B 27/20, B32B 27/36, C08K 5/00, C08K 5/08, B05D 7/04, B32B 7/00

(54) **MEHRSCHICHTKÖRPER AUS POLYCARBONAT MIT HOHER BEWITTERUNGSSTABILITÄT**
MULTI-LAYER BODY MADE OF POLYCARBONATE WITH HIGH WEATHERING RESISTANCE
CORPS MULTICOUCHE EN POLYCARBONATE DOTÉ D'UNE STABILITÉ ÉLEVÉE AUX INTEMPÉRIES

(30) Priorität: 20.12.2012 IT RM20120656
(43) Veröffentlichungstag der Anmeldung: 28.10.2015
(73) Patentinhaber: Covestro Intellectual Property GmbH & Co. KG, 51373 Leverkusen (DE)
(72) Erfinder: MEYER, Alexander, 40489 Düsseldorf (DE); TARAVELLA, Vincenzo, I-24125 Bergamo (IT); MALVESTITI, Gianmaria, I-24041 Brembate (IT)
(74) Vertreter: Levpat
(86) Internationale Anmeldenummer: PCT/EP2013/077063
(87) Internationale Veröffentlichungsnummer: WO 2014/095981

(56) Entgegenhaltungen:
- EP-A1- 1 865 027
- US-A1- 2004 247 878
- US-A1- 2009 212 587

## Beschreibung

Die vorliegende Erfindung betrifft dunkle Mehrschichtkörper aus Polycarbonat, die sich durch eine hohe Bewitterungsstabilität auszeichnen. Diese Mehrschichtkörper weisen ferner einen glasartigen Tiefenglanzeffekt auf. Die Erfindung betrifft auch ein Verfahren sowie Zusammensetzungen zur Herstellung dieser Mehrschichtkörper.

Die Mehrschichtkörper sind bevorzugt aus Polycarbonat bzw. Polycarbonatblends aufgebaut. Die Polycarbonatblends können weitere Polymerisate, wie z.B. Elastomere bzw. Pfropfpolymerisate oder weitere Thermoplaste, wie z.B. Polyester enthalten.

Besonders bevorzugte Blendpartner sind z.B. kautschukmodifizierte Vinyl(co)polymerisate wie beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Ferner sind als Blendpartner Polyester wie Polyethylenterephthalat oder Polybutylenterephthalat insbesondere geeignet.

Die Erfindung betrifft ferner die Verwendung der erfindungsgemäßen Mehrschichtkörper als Blenden für Fahrzeugteile oder als Rahmenteile für Multimediagehäuse.

Bislang fehlte es an Mehrschichtsystemen, insbesondere Mehrschichtkunstoffformteile, aus Polycarbonat, welche sich durch eine glasartige Optik auszeichnen. Diese Mehrschichtkörper sind insbesondere für Fahrzeug-Außenteile geeignet. Sie müssen über eine ausgezeichnete Oberflächenqualität, einen Tiefenglanzeffekt aber auch über eine ausgezeichnete Bewitterungsstabilität verfügen. Zu den Anwendungen zählen unter anderem Rahmenteile für Verscheibungen aus Glas wie z.B. Schiebedächer. Aufgrund der hohen Lebensdauer von Kraftfahrzeugen kommt es dabei insbesondere im Bereich hochpreisiger Automobile darauf an, daß der gewünschte qualitativ hochwertige Farbeindruck - hier der besonders schwarze Tiefenglanzeffekt - des Materials über den Zeitraum der Nutzungsdauer ohne nennenswerte Einbußen erhalten bleibt.

Diese Mehrschichtkörper bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Kfz-Außenteile, welche im Kraftfahrzeug-, Schienenfahrzeug- und Luftfahrzeug- bzw. im Infrastrukturbereich eingesetzt werden, müssen zudem eine lange Lebensdauer aufweisen und dürfen während dieser nicht verspröden. Darüber hinaus sollen sich Farbe und Glanzeffekt über die Lebensdauer nicht oder nur geringfügig verändern. Ferner müssen die thermoplastischen Teile über eine ausreichende Kratzfestigkeit verfügen.

Aufgrund der hohen geforderten Lebensdauer und aufgrund der hohen Oberflächengüte und des Tiefenglanzeffekts wird als Material häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente anorganische Oxide, wie z.B. Eisenoxid, eingesetzt werden, verändern sich die Farbeigenschaften auch über lange Zeiträume praktisch nicht. Die Verwendung dieser Pigmente in thermoplastischen Materialien ist allerdings nicht möglich, da sie zu Abbau der entsprechenden Matrix führt.

Dennoch besteht aufgrund der oben geschilderten Vorteile von Kunststoffen der Bedarf an Materialien, die sowohl die guten physikalischen Eigenschaften von Thermoplasten als auch die hohe Oberflächenqualität wie auch den gewünschten Tiefenglanzeffekt entsprechend schwarzeingefärbter Gläser aufweisen.

Unter den transparenten thermoplastischen Kunststoffen sind zum Beispiel Polymere basierend auf Polycarbonat und Polymethylmethacrylat (PMMA) besonders gut für die Verwendung als Außenteile für Kfz-Anwendungen geeignet. Aufgrund der hohen Zähigkeit besitzt insbesondere Polycarbonat ein sehr gutes Eigenschaftsprofil für derartige Einsatzzwecke.

Um die Langlebigkeit von thermoplastischen Materialien zu verbessern, ist es bekannt, diese mit UV-Schutz und/oder Kratzfestbeschichtungen zu versehen. Darüber hinaus ist eine große Anzahl von Farbmitteln bekannt, die eine hohe Lichtechtheit aufweisen.

EP1865027 A1 offenbart Mehrschichtkörper mit einer transparenten Substratschicht, die ein thermoplastisches Polymer, und zwar Polycarbonat, sowie ein auf Anthrachinon basierendes Farbmittel umfassen. Die Menge an Farbmittel in der Polycarbonat-Zusammensetzung beträgt nicht mehr als 1 Gew.-Teil, bevorzugt nicht mehr als 0.1 Gew.-Teile, basierend auf 100 Gewichtsteilen der Zusammensetzung. Das Dokument betrifft keine opaken Substratschichten.

Um ein tiefes Schwarz für thermoplastische Bauteile zu erzielen, wird nach dem Stand der Technik insbesondere Ruß eingesetzt. Vor allem wird nanaoskaliger Ruß eingesetzt, um die Oberflächenqualität nicht negativ zu beeinflussen. Es ist zudem bekannt, zusätzlich Farbmittel einzusetzen, um den Schwarzeindruck zu modifizieren oder zu verbessern. Allerdings bleibt Ruß häufig der Hauptbestandteil der Rezeptur, da dieser in allen Bereichen des sichtbaren Spektrums eine hohe und gleichmäßige Absorption aufweist. Zudem absorbiert Ruß auch im UV-Bereich und stellt damit ein wirksames UV-Schutzmittel dar.

Es wurde allerdings gefunden, dass sich bei Mehrschichtkörpern, insbesondere bei Mehrschichtkörpern, welche mit einer Siloxanlackschicht versehen sind, Ruß-haltige Systeme ungünstig auf die Bewitterungseigenschaften auswirken. Der Fachmann würde allerdings erwarten, dass Ruß aufgrund seiner UV-absorbierenden Eigenschaften die Bewitterungseigenschaften verbessert. Dies ist auch bekannt und im Stand der Technik beschrieben - z.B. in "Weatherability of Thermoplastic Piping" (www.plasicpipe.org) oder in "Plastic Piping Systems", David, A. Chasis, Industrial Press Inc. New York 1988. Durch die Zugabe von Ruß wird die Lebensdauer thermoplastischer Materialien sowohl in Außenbewitterungen als auch in künstlichen Bewitterungen signifikant verbessert.

So war es höchst überraschend, dass sich bei Mehrschichtkörpern aus Polycarbonat Ruß-haltige Farbmischungen negativ auf die Bewitterungseigenschaften auswirken.

Die Lebensdauer von Mehrschichtkörpern kann durch spezielle, erfindungsgemäße Rezepturen, welche frei von Ruß sind, signifikant erhöht werden.

Die im Stand der Technik beschriebenen thermoplastischen Zusammensetzungen auf Ruß-Basis sind nur unzureichend geeignet, wenn eine außerordentlich hohe Bewitterungsstabilität mit hoher Oberflächengüte und hohem Tiefenglanzeffekt sowie eine Klavierlackoptik erforderlich ist. Insbesondere für tiefschwarze Bauteile mit einer Klavierlack-artigen Oberfläche für Außenanwendungen, welche zudem hohe Anforderungen bezüglich der Bewitterungsperformance erfüllen müssen, bietet der Stand der Technik keine Lösungsmöglichkeiten.

In WO2012007501 wird ein Prozess zur optimalen Einarbeitung von Ruß beschrieben, um geringe Oberflächenstörungen zu erreichen. Bauteile, die nach diesem Prozess gefertigt werden, weisen allerdings nicht die geforderte Bewitterungsstabilität auf.

Auch mittels nanoskaliger oder feinteiliger Kohlenstoffmodifikationen wie z.B. Kohlenstoffnanoröhren, wie in WO 2009030357 beschrieben, oder Graphit, wie in JP 2003073557 gezeigt, kann eine hochglänzende Oberfläche erreicht werden. Jedoch wird über die Stab- bzw. Plättchen-artige Form der Teilchen dem Spritzgusskörper eine gewisse Oberflächenrauhigkeit aufgeprägt, welche unerwünscht ist.

Es ist bekannt, schwarze Bauteile bzw. dunkel eingefärbte Bauteile über Polymerzusammensetzungen, welche bestimmte Farbmittel enthalten, herzustellen.

So beschreibt US 6355723 dunkel eingefärbte Polymerzusammensetzungen mit einem Glanzeffekt. Diese eignen sich vor allem zur Metallisierung.

JP 60188450 beschreibt dunkel eingefärbte Formmassen, welche eine niedrige Transmission im visuellen und eine hohe Transmission im IR-Bereich aufweisen.

Keines dieser Dokumente beschreibt Mehrschichtkörper, die die erfindungsgemäß geforderte hohe Bewitterungsstabilität aufweisen, bzw. gibt Hinweise zur Lösung der vorliegenden Aufgabe.

Schwarze Bauteile mit Klavierlackoptik bestehend aus speziellen Polycarbonat-Polyestermischungen sind in JP2011111589 beschrieben. Allerdings werden andere Zusammensetzungen beschrieben im Vergleich zur vorliegenden Erfindung. Die JP2011111589 gibt keinerlei Informationen bezüglich der Witterungsstabilität dieser Zusammensetzungen und beschreibt auch keine Mehrschichtkörper.

Schwarze Formmassen mit hoher Bewitterungsstabilität und guten Oberflächeneigenschaften werden in JP 2005314461 oder in JP 11106518 beschrieben, die bestimmte Ruß-Gehalte aufweisen. Allerdings konnte im Rahmen der vorliegenden Erfindung gezeigt werden, dass derartige Zusammensetzungen in Bezug auf Mehrschichtkörper nicht die geforderte hohe Bewitterungsstabilität besitzen. Zudem beziehen sich die Zusammensetzungen auf spezielle Blends, die nicht Gegenstand der vorliegenden Anmeldung sind.

Kautschuk-haltige Systeme weisen allgemein eine andere Bewitterungsstabilität im Vergleich zu Polycarbonat auf.

Um die oben beschriebenen Nachteile zu umgehen, die durch Zusatz von Ruß oder anderen Kohlenstoffmodifikationen in Polymerzusammensetzungen hervorgerufen werden, können lösliche Farbstoffe eingesetzt werden, um einen hohen Oberflächenglanz - eine Art Klavierlackoptik - zu erzielen. Nachteilig an dieser Lösung ist allerdings, dass die Farbstoffe in einer relativ hohen Konzentration eingesetzt werden müssen, was im Lackierprozess der Bauteile zu Problemen führt, da sich die in hoher Konzentration vorhandenen Farbstoffe durch die Lacklösemittel leicht aus der Oberfläche des Formteils herauslösen. Dadurch färbt sich die Lackierlösung nach und nach an. Deshalb ist es wichtig, niedrige Konzentrationen löslicher Farbstoffe einzuhalten.

Ein weiterer Nachteil bei Nutzung organischer Farbstoffe stellt das Ausbleichen durch UV-Bestrahlung dar, so dass sich der Farbeindruck mit der Zeit verändert.

Es bestand daher die Aufgabe, einen schwarzen Mehrschichtkörper mit einer Lichttransmission (Ty) von weniger als 1,0%, bevorzugt weniger als 0,5%, weiter bevorzugt weniger als 0,2%, noch weiter bevorzugt weniger 0,1 % und besonders bevorzugt 0,0 %, aus einem thermoplastischen Material - vorzugsweise aus Polycarbonat - zu entwickeln, welches eine herausragende Oberflächengüte mit hohem Tiefenglanz, klavierlackartigem Schwarzeindruck mit hoher Bewitterungsfestigkeit verbindet und sich für Rahmenteile im Kfz-Bereich oder für Multimediagehäuse, wie z.B. Fernsehrahmen o. ä., welche einer UV-Belastung ausgesetzt werden, geeignet sind.

Überraschenderweise konnte die Aufgabe durch spezielle Mehrschichtkunstoffformteile, welche ein Substratmaterial mit speziellen Farbmitteln enthalten und eine UV- und Kratzfestbeschichtung aufweisen, gelöst werden. Es zeigte sich, dass sich nur ganz bestimmte Farbmittelmischungen in Kombination mit einer speziellen transparenten Lackschicht eignen, um den gewünschten Tiefenglanzeffekt und die gewünschte Bewitterungsstabilität zu erreichen. Dies war umso überraschender, da Farbmittel eingesetzt werden, die in transparenten Einstellungen eine ungenügende Bewitterungsperformance aufweisen

Ein derartiger Formkörper zeigt in einer Xe-Bewitterung nach ASTM G155 (0,75 W /m² nm bei 340 nm) keine Verfärbung und keine Defekte in der Lackschicht nach 5000 Stunden, bevorzugt nach 6000 h Bewitterungszeit.

Die vorliegende Erfindung betrifft eine Mehrschichtstruktur und ein Verfahren zu deren Herstellung gemäß den vorliegenden Ansprüchen 1 bis 12.

Der erfindungsgemäße Mehrschichtkörper umfasst:
a) mindestens eine Substratschicht enthaltend Polycarbonat,
b) mindestens auf einer Seite der Substratschicht eine Deckschicht, dadurch gekennzeichnet, dass
a1) die Substratschicht weiterhin enthält: eine Kombination von Farbmitteln der Struktur (1C) mit mindestens einem Farbmittel der Strukturen (1H), (1G), (1D) oder (2), die weiter hinten in der Beschreibung offenbart werden;
wobei die Farbmittel jeweils in Konzentrationen von 0,02 bis 0,2 Gew.-% eingesetzt werden,
a2) 0,01 Gew.-% bis 1,00 Gew.-% ein oder mehrere Entformer auf Basis eines Fettsäureesters und
die Deckschicht aus einer Beschichtung auf Polysiloxanbasis oder Polyacrylatbasis oder Polyurethanacrylatbasis besteht und mindestens einen UV-Absorber enthält und eine Schichtdicke von 2 - 15µm aufweist.

In einer besonderen Ausführungsform besteht die Substratschicht a) aus einem Polycarbonatblend enthaltend Polycarbonat und kautschukmodifizierte Vinyl(co)polymerisate, wie beispielsweise ABS-Polymerisate, oder Polyester, wie Polyethylenterephthalat oder Polybutylenterephthalat. Insbesondere bevorzugt ist ein Polycarbonat mit einer Schmelzvolumenrate von 6 bis 35 cm³/(10 min), bevorzugt 6 cm³/(10 min) bis 25 cm³/(10 min), insbesondere bevorzugt 9 bis 21 cm³/(10 min), nach ISO 1133 (bei 300 °C und 1,2 kg Belastung).

Bevorzugt weist die Substratschicht a) eine Lichttransmission von weniger als 1,0%, bevorzugt weniger als 0,5%, weiter bevorzugt weniger als 0,2%, noch weiter bevorzugt weniger 0,1 % und besonders bevorzugt 0,0 % auf.

Die Substratschicht a) enthält neben dem thermoplastischen Polymer, daß sich zu den übrigen Komponenten zu 100 Gew.-% addiert, folgende Komponenten (A) bis (D):
A) mindestens eine Kombination von Farbmitteln der Struktur (1C) mit mindestens einem Farbmittel der Strukturen (1H), (1G), (1D) oder (2).

Der erfindungsgemäße Anthrachinon-basierte Farbmittel mit der Struktur (2) ist:

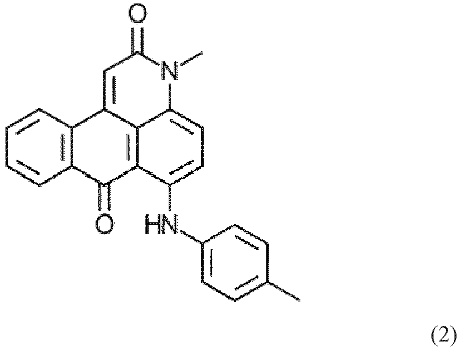

Farbmittel der Struktur (2) sind z.B. unter Solvent Red 52 bekannt und unter dem Handelsnamen Macrolex Rot 5B bei Lanxess AG erhältlich.

Anthrachinon-basierte Farbmittel der Struktur (1C), (1H), (1G) und (1D) sind:

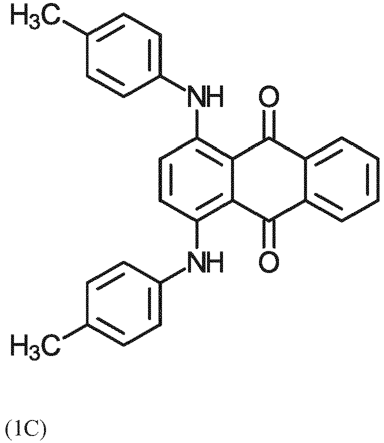

Die Farbmittel der Struktur (1C) sind z.B. unter dem Handelsnamen Macrolex Grün 5B bei der Firma Lanxess AG erhältlich.

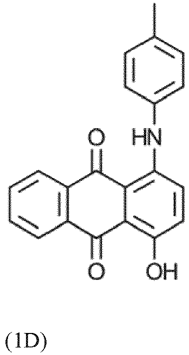

Farbmittel der Formel (1D) sind z.B. unter dem Handelsnamen Macrolex Violet B bei der Firma Lanxess AG erhältlich.

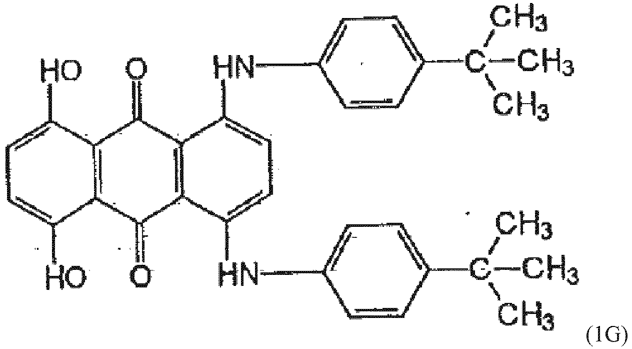

Die Farbmittel der Formel (1G) sind z.B. unter dem Handelsnamen Macrolex Grün G bei der Firma Lanxess AG erhältlich.

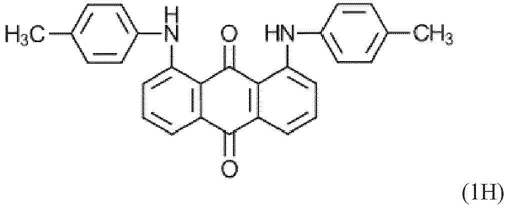

Die Farbmittel der Formel (1H) sind z.B. unter dem Handelsnamen Macrolex Violet 3R bei der Firma Lanxess AG erhältlich.

In einer bevorzugten Ausführungsform ist die Substratschicht frei von Ruß. In einer bevorzugten Ausführungsform ist die Substratschicht frei von Perinon-basierten Farbstoffen (z.B. Struktur 3).

Die Farbmittel werden jeweils in Konzentrationen von 0,02 bis 0,2 Gew.-% bevorzugt von 0,05 bis 0,15 und insbesondere bevorzugt von 0,08 bis 0,13 Gew.-% eingesetzt. Die Dicke des jeweiligen Extrudats oder Spritzgusskörpers beträgt dabei 0,01 mm bis 10 mm, bevorzugt 0,1 bis 9 mm, insbesondere bevorzugt 1 bis 8 mm und ganz besonders bevorzugt 2 bis 6 mm.

B) Die Substratschichtschicht enthält Entformungsmittel auf Basis eines Fettsäureesters, bevorzugt eines Stearinsäureesters, insbesondere bevorzugt auf Pentaerythritbasis.

In einer besonderen Ausführungsform werden Pentaerythrittetrastearat (PETS) und/oder Glycerinmonostearat (GMS) eingesetzt.

Es werden 0,01 Gew.-% bis 1,0 Gew.-%, bevorzugt 0,01 Gew.-% bis 0,50 Gew.-%, besonders bevorzugt 0,05 Gew.-% bis 0,40 Gew.-% ein oder mehrere Entformer eingesetzt.

C) Die Basisschicht enthält optional einen Thermostabilisator. In einer bevorzugten Ausführungsform enthält die Polymerzusammensetzung der Basisschicht mindestens einen Thermo- bzw. Verarbeitungsstabilisator.

Bevorzugt geeignet sind Phosphite und Phosphonite sowie Phosphine. Beispiele sind Triphenylphosphit, Diphenylalkylphosphit, Phenyldialkylphosphit, Tris(nonylphenyl)-phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) und Tris(nonylphenyl)phosphit oder deren Mischungen eingesetzt. Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit- 3-(4-hydroxy-3,5-di-tert-butylphenyl)propionat; CAS: 6683-19-8) und Irganox 1076^{®} (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

Die Thermostabilisatoren werden in Mengen von 0,00 Gew.-%- 0,20 Gew.-%, bevorzugt 0,01 Gew.-% - 0,10 Gew.-%, weiter bevorzugt von 0,01 Gew.-% bis 0,05 Gew.-%, und besonders bevorzugt von 0,015 Gew.-% bis 0,040 Gew.-% eingesetzt.

Ferner können Verarbeitungstabilisatoren auf Phosphatbasis in der Substratschicht enthalten sein. Das Phosphat hat dabei bevorzugt die folgende Struktur (8) 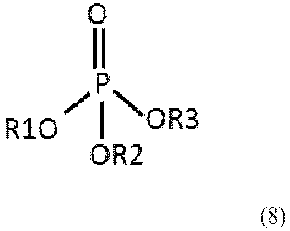 wobei R1 bis R3 H, gleiche oder unterschiedliche lineare, verzweigte oder zyklische Alkylreste sein können. Besonders bevorzugt sind C1-C13 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z. B. Mono-, Di- und Trihexylphosphat, Triisoctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Die verwendeten Verarbeitungsstabilisatoren werden in Mengen von weniger als 0,0500 Gew.-%, bevorzugt von 0,00005 Gew.-% bis 0,05000 Gew.-%, besonders bevorzugt 0,0002 bis 0,0500 Gew.-%, ganz besonders bevorzugt von 0,0005 Gew.-% bis 0,0300 Gew.-% und in einem sehr bevorzugtem Fall von 0,001 Gew.-% bis 0,0120 Gew.-%, bezogen auf das Gesamtgewicht der Zusammensetzung, eingesetzt.

In der Substratschicht ist die Verwendung von Phosphaten der Struktur (8) und insbesondere von Triphenylphosphin insbesondere bevorzugt.

D) Optional 0,0 Gew.-% bis 20,00 Gew.-%, bevorzugt von 0,05 Gew.-% bis 10,00 Gew.-%, weiter bevorzugt von 0,10 Gew.-% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber bezogen auf die Gesamtmenge an UV-Absorbern; optional 0,00 Gew.-% bis 20,00 Gew.-%, bevorzugt von 0,05 Gew.-% bis 10,00 Gew.-%, weiter bevorzugt von 0,10 Gew.-% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens eines UV-Absorbers.

Geeignete UV-Absorber sind beispielsweise beschrieben in der EP 1 308 084 A1, in der DE 102007011069 A1 sowie in der DE 10311063 A1; Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG). Es können auch Mischungen dieser Ultraviolett-Absorber eingesetzt werden

Optional enthält die Basisschicht 0,0 Gew.-% bis 5,0 Gew.-%, bevorzugt 0,01 Gew.-% bis 1,00 Gew.-% mindestens eines weiteren Additivs. Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben sind wie z.B. Flammschutzmittel, Antistatika oder Fließverbesserer. Die bereits genannten Komponenten der Basisschicht sind in diesem Zusammenhang ausdrücklich ausgenommen.

Die obigen Mengenangaben beziehen sich jeweils auf die gesamte Polymer-Zusammensetzung.

In einer besonders bevorzugten Ausführungsform besteht die Basisschicht aus Bisphenol A-basierten Polycarbonat enthaltend lediglich die Komponenten A), B) und C).

Deckschicht b)
Die Deckschicht b) besteht aus einer Beschichtung auf Polysiloxanbasis oder Polyacrylatbasis oder Polyurethanacrylatbasis, bevorzugt auf Polysiloxanbasis, enthaltend
i. mindestens einen UV-Absorber,
wobei
ii. die Dicke der Deckschicht von 2 bis 15 µm, insbesondere bevorzugt von 4,0 bis 12,0 µm, beträgt.

In einer weiter bevorzugten Ausführungsform ist mindestens eine auf der Basisschicht angeordnete haftvermittelnde Schicht (Primerschicht) zwischen der Basisschicht und der Deckschicht angeordnet, wobei die Dicke der Primerschicht 0,3 bis 8 µm, insbesondere bevorzugt 1,1 bis 4,0 µm, beträgt.

In einer noch weiter bevorzugten Ausführungsform ist auf beiden Seiten der Basisschicht eine haftvermittelnde Schicht sowie eine Deckschicht aufgetragen.

Der UV-Absorber in der Deckschicht kann dabei ein UV-Absorber ausgewählt aus der Gruppe der unter d) genannten, bevorzugt mit mindestens einem UV-Absorber aus der Klasse der Benzophenone, insbesondere bevorzugt 4,6-Dibenzoyl-2-(3-triethoxysilylpropyl)resorcin, sein.

Bevorzugt sind UV-Absorber in der Deckschicht und in der Primerschicht enthalten - in der Basischicht ist die Anwesenheit des UV-Absorbers dagegen optional.

Die Konzentration des UV-Absorbers oder des UV-Absorbergemischs in der Deckschicht liegt zwischen 1 und 30 Gew.-%, bevorzugt zwischen 5 Gew.-% und 20 Gew.-%.

Die Tiefenoptik wird durch einen Mehrschichtkörper enthaltend eine Substratschicht, welche die erfindungsgemäße Kombination der Farbstoffe enthält, sowie mit einer Primerschicht spezieller Dicke und einer Kratzfestschicht aus Polysiloxanlack erreicht. Nur die Kombination dieser Komponenten und Eigenschaften macht es möglich, einen derartigen Effekt zu erzielen.

Nur durch die Verwendung der speziellen Zusammensetzung für die Substratschicht a) in Kombination mit der Deckschicht b) lässt sich die gewünschte hervorragende Witterungsfestigkeit erreichen.

Die erfindungsgemäßen Mehrschichtkörper sind z.B. für schwarze Blenden, welche für Außenanwendungen im Kfz-Bereich vorgesehen sind, geeignet. Diese Blenden können z.B. Glaselemente wie (Fenster-)Scheiben bzw. Schiebedächer oder Scheinwerfer umfassen bzw. einrahmen. Durch die schwarze Tiefenglanzoptik wirkt der Scheibenbereich vergrößert, da das Dach, wie z.B. ein Panoramadach, als Vollglasoptik erscheint. Auch Zierblenden können aus diesem Material gefertigt werden. Ferner sind Zwischenstücke, die Glaseinheiten optisch verbinden, gemeint. Ebenso Zwischenstücke zwischen A- und B-Säule im Automobilbereich. An dem Rahmen sind ggf. Versteifungsrippen, Montagehilfen und Bereiche zur Aufnahme der Kleberaupe angespritzt, um eine entsprechende leichte Montage zu ermöglichen. Ferner kann eine spezielle Formgebung, wie eine spezielle 3-dimensionale Form vorhanden sein. Da die Rahmen relativ groß sind und eine komplexe Geometrie aufweisen, muss das thermoplastische Material eine ausreichende Fließfähigkeit aufweisen, um im Spritzgußprozess, wie z.B. speziell dem Spritzprägeverfahren, zu entsprechenden Formkörpern verarbeitet werden zu können.

Das Material ist auch für Rahmen oder Gehäuse, welche im Elektro- oder Multimedia-Bereich eingesetzt werden, geeignet. Beispiele wären hier z.B. Fernsehrahmen, Laptopgehäuse, Lampenabdeckungen etc.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 10.000 bis 50.000 g/mol, vorzugsweise von 14.000 bis 40.000 g/mol und insbesondere von 16.000 bis 32.000 g/mol, und ganz besonders bevorzugt von 24.000 bis 31.000 g/mol ermittelt durch Gelpermeationschromatographie mit Polycarbonateichung, Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen, oder beim Schmelzeumesterungsprozess mit Diphenylcarbonat bzw. Dimethylcarbonat dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5) , EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Herstellung der Polymer-Zusammensetzung für die erfindungsgemäße Basisschicht enthaltend die oben genannten Komponenten erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren wie unter anderem als Masterbatch eingebracht werden.

Die Verwendung von Masterbatchen sowie von Pulvermischungen oder kompaktierten Vormischungen ist insbesondere zum Einbringen der oben genannten Komponenten geeignet. Hierbei können wahlweise alle vorgenannten Komponenten vorgemischt werden. Alternativ sind aber auch Vormischungen der Komponenten möglich. In allen Fällen werden für eine bessere Dosierbarkeit bei der Herstellung der thermoplastischen Polymer-Zusammensetzungen die vorgenanten Komponenten-Vormischungen bevorzugt mit der pulverförmiger Polymerkomponente so aufgefüllt, dass gut handhabbare Gesamtvolumina entstehen.

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einem zweiten Aspekt betrifft die vorliegende Erfindung ein Verfahren zur Herstellung von bewitterungsstabilen Mehrschichtkunststoffformteilen mit Tiefenganzoptik aus folgenden Schritten:
1. Herstellung eines Substratmaterials enthaltend Polycarbonat mit einem MVR von 7 cm³/(10 min) bis 25 cm³/(10 min), bevorzugt 9 bis 21 cm³/(10 min) nach ISO 1133 bei 300 °C und 1,2 kg Belastung, enthaltend eine Kombination von Farbmitteln der Struktur (1C) mit mindestens einem Farbmittel der Strukturen (1H), (1G), (1D) oder (2), wobei die Farbmittel jeweils in Konzentrationen von 0,02 bis 0,2 Gew.-% eingesetzt werden,
   a2) 0,01 Gew.-% bis 1,00 Gew.-% ein oder mehrere Entformer auf Basis eines Fettsäureesters; sowie optional
   a3) mindestens einen Thermostabilisator,
   a4) mindestens einen Verarbeitungsstabilisator,
   a5) mindestens einen UV-Absorber, und
   a6) mindestens ein weiteres Additiv;
2. Herstellung eines Formteils in spezieller Rahmengeometrie im Spritzgußverfahren oder Spritzprägeverfahren.
3. Beschichtung des Formteils im Flutverfahren mit einer Primerlöung enthaltend
   a) organisches Bindematerial, das eine Haftvermittlung zwischen PC und einem polysiloxanbasierten Lack ermöglicht,
   b) mindestens einen UV-Absorber,
   c) ein Lösemittel auf Alkoholbasis.
   Ablüften des Bauteils für 10 - 60 min bei Raumtemperatur und Härtung für 5 min bis 60 min bei 100 - 135 °C.
4. Beschichtung des Formteils mit einem Siloxanlack im Flutverfahren enthaltend
   a) Siliciumorganische Verbindungen der Formel RₙSiX₄₋ₙ mit n von 1 bis 4, wobei R für aliphatische C1- bis C10-Reste, bevorzugt Methyl-, Ethyl-, Propyl-, Isopropyl-, Butyl-, und Isobutyl-, sowie Arylreste, bevorzugt Phenyl, und substituierte Arylreste steht und X für H, aliphatische C1- bis C10-Reste, bevorzugt Methyl-, Ethyl-, Propyl-, Isopropyl-, Butyl-, und Isobutyl-, sowie Arylreste, bevorzugt Phenyl, substituierte Arylreste, für OH, Cl steht oder partielle Kondensate derselben, b) anorganische feinteilige Verbindung, bevorzugt SiO₂.
   c) ein Lösemittel auf Alkoholbasis,
   d) mindestens einen UV-Absorber.

Ablüften des Bauteils für 10 - 60 min bei Raumtemperatur und Härtung für 10 min bis 120 min bei 100 - 140 °C.

Die erfindungsgemäßen Polymer-Zusammensetzungen können zu Erzeugnissen oder Formkörpern verarbeitet werden, indem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Bevorzugt ist hierbei das Spritzgießen oder Spritzprägen.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Die Herstellung der Beschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedene Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen.

Neben dem oben genannten bevorzugten Verfahren sind also verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasmagestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm. Unterhalb von 1 µm ist die Beständigkeit der Kratzfestschicht ungenügend. Oberhalb von 20 µm treten häufiger Risse im Lack auf.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nachdem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 (CAS: 857052-28-9) von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden. Diese sind z.B. in EP0570165 oder WO 2008/071363 oder DE 2804283 beschrieben. Kommerziell erhältliche Hybrid-Systeme sind z.B. unter den Namen PHC587 oder UVHC 3000 von Momentive Performance Materials erhältlich.

In einer besonders bevorzugten Ausführungsform wird als Primer ein haftvermittelnder UV-Schutzprimer auf Basis von Polymethylmethacrylat enthaltend 1-Methoxy-2-propanol und Diacetonalkohol als Lösemittel und eine UV-Absorberkombination enthaltend Dibenzoylresorcin und ein Traizinderivat verwendet. In einer besonders bevorzugten Ausführungsform ist der Decklack insbesondere bevorzugt ein Polysiloxandecklack aus einem Sol-Gel Kondensat aus Methyltrimethylsilan mit Kieselsol enthaltend einen silylierten UV-Absorber.

Der UV-Absorber in der Primerschicht ist bevorzugt UV-Absorber ausgewählt aus der Gruppe der unter d) genannten, bevorzugt aus der Klasse der Biphenyltriazine, insbesondere bevorzugt 2-[2-Hydroxy-4-[(octyloxycarbonyl)ethylidenoxy]phenyl-4,6-di(4-phenyl)phenyl-1,3,5-triazin.

Die Konzentration des UV-Absorbers oder des UV-Absorbergemischs in der Primerschicht liegt zwischen 5 Gew.-% und 50 Gew.-%, bevorzugt zwischen 15 Gew.-% und 40 Gew.-%.

In einem besonders bevorzugten Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei können die Bauteile sowohl hängend als auch in einem entsprechenden Warenträger gelagert beschichtet werden.

Bei größeren und/oder 3D-Bauteilen wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Mehrschichtkörper lassen sich besonders bevorzugt als Rahmen für Scheiben-Modulen für Automobile, Schienen- und Luftfahrzeuge einsetzen. Auch andere Rahmenteile sind bevorzugt.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Schmelzvolumenrate:

Die Bestimmung des Schmelzvolumenrate (MVR) erfolgt nach ISO 1133 (bei 300 °C; 1,2 kg).

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

Bewitterung:
Die künstliche Bewitterung mit Xenon-Belichtung wird nach Norm ASTM G 155 in einem Xenon-Weatherometer CI 5000 der Firma Atlas durchgeführt. Als UV-Filter wurden zwei Borosilikatfilter verwendet. Die Einstrahlungsstärke beträgt 0.75 W/m²/nm bei 340 nm. Die Schwarzstandardtemperatur beträgt 80°C, die Probenraumtemperatur 40°C. Die Proben werden alle 120 min für 18 min beregnet, wobei die Belichtung auch während der Beregnungsphase eingeschaltet bleibt. Das vorgenannte Bewitterungsverfahren wird im folgenden Xe-Wom 0.75W genannt.

Materialien zur Herstellung der Probekörper:
- Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), enthaltend 0,025 Gew.-% Triphenylphosphin (CAS 603-35-0) und 0,40 Gew.-% Pentaerythrittetrastearat (CAS 115-83-3), nachfolgend mit PC1 bezeichnet.
- Für die Vergleichsbeispiele wird als nanoskaliger Ruß -auch im Masterbatch - Black Pearls^{®} 800 (CAS-No. 1333-86-4) (Partikelgröße ca. 17 nm) der Firma Cabot Corp. eingesetzt.
- Für das erfindungsgemäße Beispiel wird das Farbmittel der Struktur (1H) Macrolex Violet 3R der Firma Lanxess AG eingesetzt.
- Für das erfindungsgemäße Beispiel wird als Farbmittel der Struktur (1C) Macrolex Grün 5B der Firma Lanxess AG eingesetzt.

### Lackierung der Prüfkörper:

Als Primer wird das Produkt SHP470FT (Momentive Performance Materials Inc. Wilton, CT USA) verwendet. Als Schutzlack wird das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Prüfkörper wurden mit sogenannten Iso-Tüchern (LymSat^{®} der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probekörper erfolgt per Hand nach dem Flutverfahren. Hierbei wird die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Um eine ausreichende und vergleichbare Schutzwirkung gegen Bewitterung zu erreichen, soll die Primerschichtdicke für die nachfolgenden Beispiele im Bereich 1,2 - 4,0 µm und die Dicke des Topcoats zwischen 4,0 und 8,0 µm liegen.

### Herstellung der thermoplastischen Polymer-Zusammensetzungen durch Compoundierung:

Die Compoundierung der Polymer-Zusammensetzung erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit den in den Beispielen angegebenen Mengen an Komponenten.

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x 3,2 mm) verarbeitet.

### Beispiel 1 (erfindungsgemäß)

PC1 wird mit 0,1 Gew.-% Macrolex Violet 3R und 0,1 Gew.-% Macrolex Grün 5B wie oben beschrieben compoundiert. Es werden die oben beschriebenen Farbmusterplatten hergestellt und wie beschrieben lackiert und bewittert.

### Beispiel 2 (Vergleich)

PC1 wird mit 0,08 Gew-% Blackpearls wie oben beschrieben compoundiert. Es werden die oben beschriebenen Farbmusterplatten hergestellt und wie beschrieben lackiert und bewittert.

### Beispiel 3 (Vergleich)

PC1 wird mit 0,16 Gew-% Blackpearls wie oben beschrieben compoundiert. Es werden die oben beschriebenen Farbmusterplatten hergestellt und wie beschrieben lackiert und bewittert.

| | Beispiel 1 (erfindungsgemäß) | Beispiel 2 (Vergleich) | Beispiel 3 (Vergleich) |
|---|---|---|---|
| Lichttransmission | 0 % | 0% | 0% |
| Befund nach 5000 h Xe-WOM 0,75 W Bewitterung | Keine Defekte | Keine Defekte | Risse; beginnende Delamination der Lackschicht |
| Befund nach 6000 h Xe-WOM 0,75 W Bewitterung | Keine Defekte | Großflächige Delamination der Lackschicht | Großflächige Delamination der Lackschicht |

Man erkennt, dass der erfindungsgemäße Mehrschichtkörper eine deutlich höhere Bewitterungsfestigkeit aufweist als die Mehrschichtkörper, welche dem Stand der Technik entsprechen.

## Patentansprüche

1. Mehrschichtkörper mit hoher Bewitterungsstabilität umfassend
a) eine Substratschicht, enthaltend Polycarbonat,
b) mindestens auf einer Seite der Substratschicht eine Deckschicht,
**dadurch gekennzeichnet, dass**
a1) die Substratschicht weiterhin enthält:
eine Kombination von Farbmitteln der Struktur (1C) 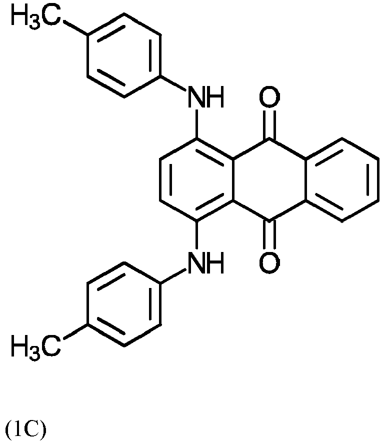
mit mindestens einem Farbmittel der Strukturen (1H), (1G), (1D) oder (2) 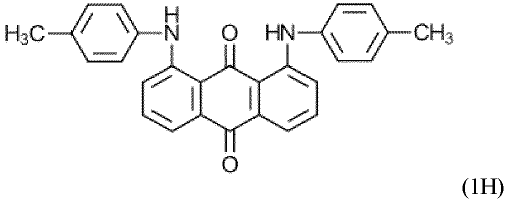 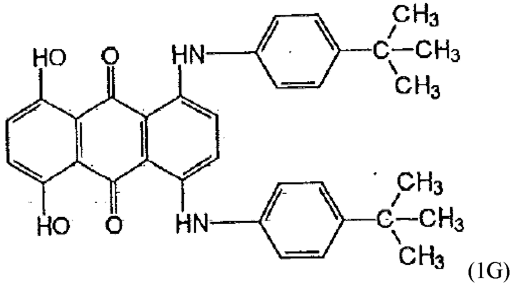 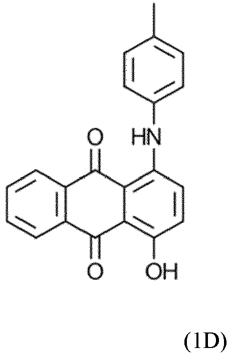 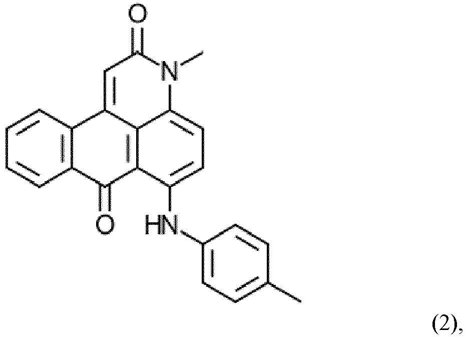 wobei die Farbmittel jeweils in Konzentrationen von 0,02 bis 0,2 Gew.-% eingesetzt werden,
a2) 0,01 Gew.-% bis 1,00 Gew.-% ein oder mehrere Entformer auf Basis eines Fettsäureesters und
die Deckschicht aus einer Beschichtung auf Polysiloxanbasis oder Polyacrylatbasis oder Polyurethanacrylatbasis besteht und mindestens einen UV-Absorber enthält und eine Schichtdicke von 2 - 15µm aufweist.

2. Mehrschichtkörper nach Anspruch 1, **dadurch gekennzeichnet, dass** die Substratschicht frei von Ruß und Perinon-basierten Farbstoffen ist.

3. Mehrschichtkörper nach einem der vorhergehenden Ansprüche, **dadurch gekennzeichnet, dass** die Substratschicht weiterhin folgende Komponenten enthält:
a3) mindestens einen Thermostabilisator in einem Anteil von 0,00 Gew.-% - 0,20 Gew.-%,
a4) mindestens einen Verarbeitungsstabilisator in einem positiven Anteil von weniger als 0,05 Gew.-%,
a5) mindestens einen UV-Absorber in einem Anteil von 0,0 bis 20,0 Gew.-%,
a6) mindestens ein weiteres Additiv in einem Anteil von 0,0 Gew.-% bis 5,0 Gew.-%.

4. Mehrschichtkörper nach einem der vorhergehenden Ansprüche, **dadurch gekennzeichnet, dass** die Substratschicht weiterhin folgende Komponenten enthält:
a3) mindestens einen Thermostabilisator in einem Anteil von 0,01 Gew.-% - 0,10 Gew.-%,
a4) mindestens einen Verarbeitungsstabilisator in einem Anteil 0,00005 Gew.-% bis 0,05000 Gew.-%,
a5) mindestens einen UV-Absorber in einem Anteil von 0,10 bis 1,00 Gew.-%,
a6) mindestens ein weiteres Additiv in einem Anteil von 0,01 Gew.-% bis 1,00 Gew.-%.

5. Mehrschichtkörper nach einem der vorhergehenden Ansprüche, **dadurch gekennzeichnet, dass** das thermoplastische Polymer der Substratschicht ein Polycarbonat oder ein Polycarbonatblend, welches Vinyl(co)polymerisate oder Polyester enthält, ist.

6. Mehrschichtkörper nach einem der vorhergehenden Ansprüche, **dadurch gekennzeichnet, dass** Komponente a4) Triisooctylphosphat ist.

7. Mehrschichtkörper nach einem der vorhergehenden Ansprüche, **dadurch gekennzeichnet, dass** die Deckschicht eine Polysiloxanbasis aufweist.

8. Mehrschichtkörper nach einem der vorhergehenden Ansprüche, **dadurch gekennzeichnet, dass** die Deckschicht eine Dicke von 1,0 bis 12,0 µm aufweist.

9. Mehrschichtkörper nach einem der vorhergehenden Ansprüche, **dadurch gekennzeichnet, dass** auf beiden Seiten der Substratschicht eine Deckschicht angeordnet ist.

10. Mehrschichtkörper nach einem der vorhergehenden Ansprüche, **dadurch gekennzeichnet, dass** zwischen Deckschicht und Substratschicht eine Primerschicht angeordnet ist.

11. Mehrschichtkörper nach einem der vorhergehenden Ansprüche, **dadurch gekennzeichnet, dass** die Primerschicht eine Dicke von 0,3 µm bis 8,0 µm aufweist.

12. Verfahren zur Herstellung eines Mehrschichtkörpers nach einem der Ansprüche 1 bis 11, **dadurch gekennzeichnet, dass** es die folgenden Schritte umfasst:
- Herstellung eines Substratmaterials, enthaltend Polycarbonat mit einem MVR von 7 cm³/(10 min) bis 25 cm³/(10 min) nach ISO 1133 bei 300 °C und 1,2 kg Belastung, enthaltend
a1) eine Kombination von Farbmitteln der Struktur (1C) 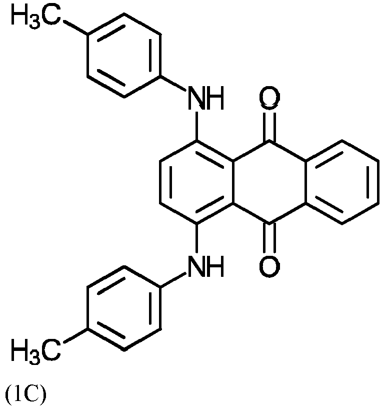 mit mindestens einem Farbmittel der Strukturen (1H), (1G), (1D) oder (2) 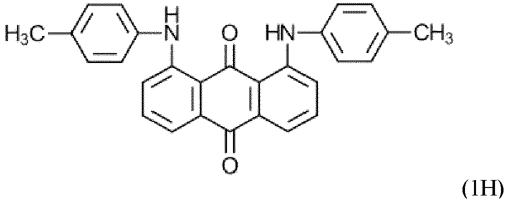 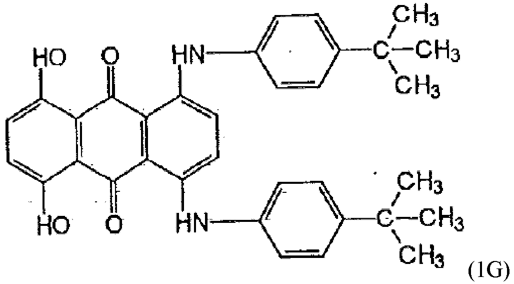 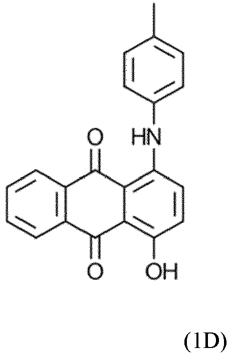 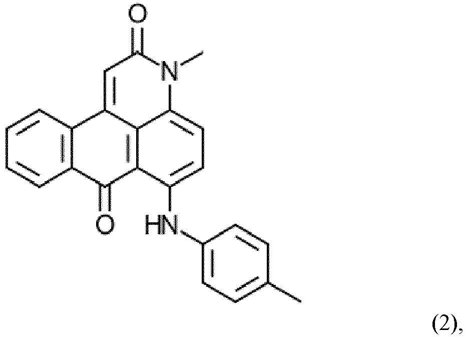 wobei die Farbmittel jeweils in Konzentrationen von 0,02 bis 0,2 Gew.-% eingesetzt werden, a2) 0,01 Gew.-% bis 1,00 Gew.-% ein oder mehrere Entformer auf Basis eines Fettsäureesters sowie optional die Komponenten a3) bis a6);
- Herstellung eines Formteils in spezieller Rahmengeometrie bei hohen Werkzeugtemperaturen;
- Beschichtung des Formteils im Flutverfahren mit einer Primerlösung, enthaltend
a) organisches Bindematerial, das eine Haftvermittlung zwischen Polycarbonat und einem polysiloxanbasierten Lack ermöglicht, und
b) mindestens einen UV-Absorber,
c) ein Lösemittel auf Alkoholbasis,
- Ablüften des Bauteils für 10 - 60 min bei Raumtemperatur und Härtung für 5 min bis 60 min bei 100 - 135 °C,
- Beschichtung des Formteils mit einem Siloxanlack im Flutverfahren, enthaltend
a) siliciumorganische Verbindungen der Formel RₙSi(OX)₄₋ₙ mit n von 1 bis 4, wobei R für aliphatische C₁- bis C₁₀-Reste sowie Arylreste steht und X für H, aliphatische C₁- bis C₁₀-Reste sowie Arylreste steht, oder partielle Kondensate derselben,
b) mindestens eine anorganische feinteilige Verbindung,
c) ein Lösemittel auf Alkoholbasis,
d) mindestens einen UV-Absorber;
- Ablüften des Bauteils für 10 - 60 min bei Raumtemperatur und Härtung für 10 min bis 120 min bei 100 - 140 °C.

## Claims

1. Multilayer structure having high weathering stability, comprising
a) a substrate layer containing polycarbonate,
b) an outer layer at least on one side of the substrate layer,
**characterized in that**
a1) the substrate layer further comprises:
a combination of colourants of the structure (1C) 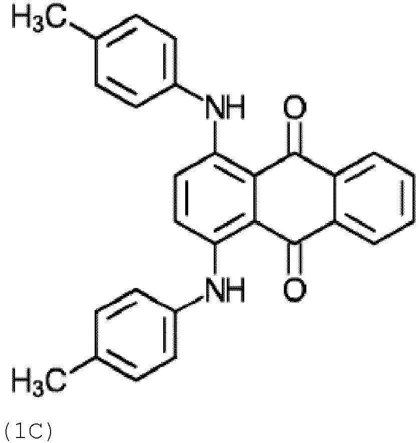
with at least one colourant of the structures (1H), (1G), (1D) or (2) 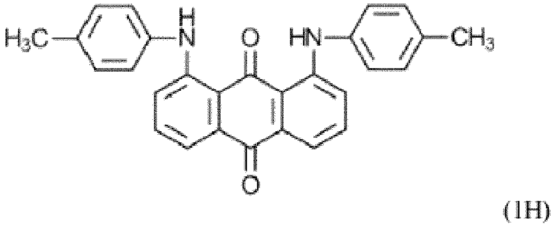 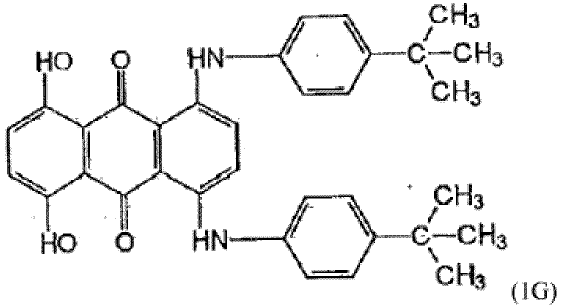 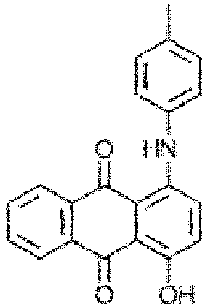 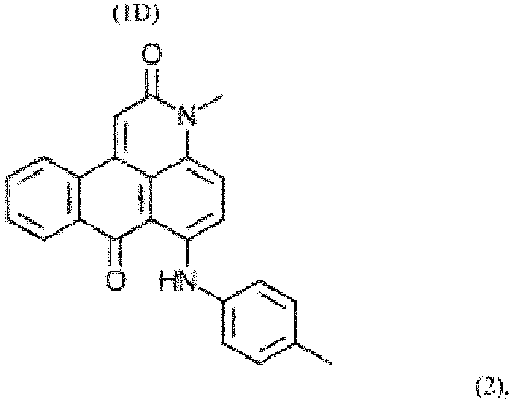
wherein the colourants are each used in concentrations of 0.02% to 0.2% by weight,
a2) 0.01% by weight to 1.00% by weight of one or more demoulding agents based on a fatty acid ester and
the outer layer consists of a polysiloxane-based or polyacrylate-based or polyurethane acrylate-based coating and contains at least one UV absorber and has a layer thickness of 2-15 µm.

2. Multilayer structure according to Claim 1, **characterized in that** the substrate layer is free of carbon black and perinone-based dyes.

3. Multilayer structure according to either of the preceding claims, **characterized in that** the substrate layer further comprises the following components:
a3) at least one thermal stabilizer in a proportion of 0.00% by weight-0.20% by weight,
a4) at least one processing stabilizer in a positive proportion of less than 0.05% by weight,
a5) at least one UV absorber in a proportion of 0.0% to 20.0% by weight,
a6) at least one further additive in a proportion of 0.0% by weight to 5.0% by weight.

4. Multilayer structure according to any of the preceding claims, **characterized in that** the substrate layer further comprises the following components:
a3) at least one thermal stabilizer in a proportion of 0.01% by weight-0.10% by weight,
a4) at least one processing stabilizer in a proportion of 0.00005% by weight to 0.05000% by weight,
a5) at least one UV absorber in a proportion of 0.10% to 1.00% by weight,
a6) at least one further additive in a proportion of 0.01% by weight to 1.00% by weight.

5. Multilayer structure according to any of the preceding claims, **characterized in that** the thermoplastic polymer in the substrate layer is a polycarbonate or a polycarbonate blend containing vinyl (co)polymers or polyesters.

6. Multilayer structure according to any of the preceding claims, **characterized in that** component a4) is triisoctyl phosphate.

7. Multilayer structure according to any of the preceding claims, **characterized in that** the outer layer is based on polysiloxane.

8. Multilayer structure according to any of the preceding claims, **characterized in that** the outer layer has a thickness of 1.0 to 12.0 µm.

9. Multilayer structure according to any of the preceding claims, **characterized in that** an outer layer is disposed on both sides of the substrate layer.

10. Multilayer structure according to any of the preceding claims, **characterized in that** a primer layer is disposed between the outer layer and substrate layer.

11. Multilayer structure according to any of the preceding claims, **characterized in that** the primer layer has a thickness of 0.3 µm to 8.0 µm.

12. Process for producing a multilayer structure according to any of Claims 1 to 11, **characterized in that** it comprises the following steps:
- producing a substrate material comprising polycarbonate having an MVR of 7 cm³/ (10 min) to 25 cm³/ (10 min) to ISO 1133 at 300°C and a load of 1.2 kg, comprising
a1) a combination of colourants of the structure (1C) 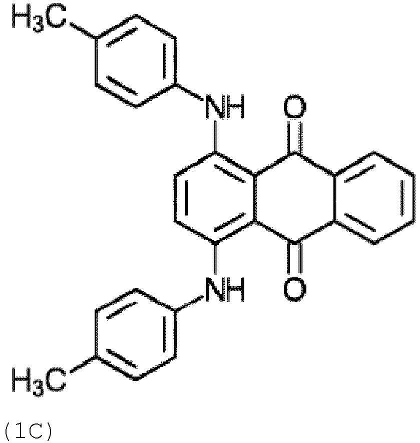 with at least one colourant of the structures (1H), (1G), (1D) or (2) 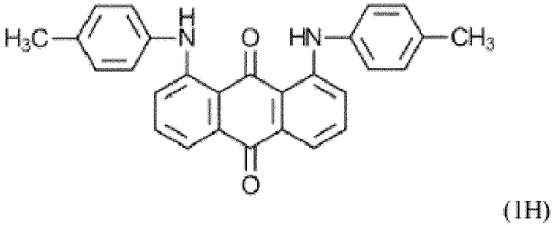 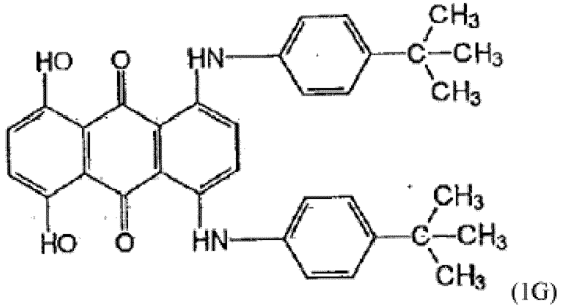 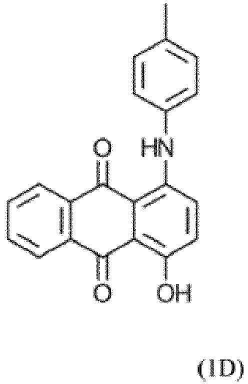 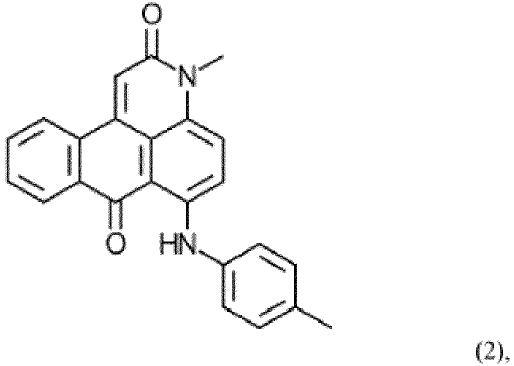 wherein the colourants are each used in concentrations of 0.02% to 0.2% by weight,
a2) 0.01% by weight to 1.00% by weight of one or more demoulding agents based on a fatty acid ester and optionally components a3) to a6);
- producing a moulding in a specific framework geometry at high mould temperatures;
- coating the moulding in a flow-coating process with a primer solution comprising
a) organic binder material which enables adhesion between polycarbonate and a polysiloxane-based coating material, and
b) at least one UV absorber,
c) an alcohol-based solvent,
- venting the component at room temperature for 10-60 min and curing at 100-135°C for 5 min to 60 min,
- coating the moulding with a siloxane coating material in a flow-coating process comprising
a) organosilicon compounds of the formula RₙSi(OX)₄₋ₙ with n from 1 to 4, where R represents aliphatic C₁ to C₁₀ radicals and aryl radicals, and X is H, aliphatic C₁ to C₁₀ radicals and aryl radicals, or partial condensates thereof,
b) at least one finely divided inorganic compound,
c) an alcohol-based solvent,
d) at least one UV absorber;
- venting the component at room temperature for 10-60 min and curing at 100-140°C for 10 min to 120 min.

## Revendications

1. Corps multicouche présentant une stabilité élevée aux intempéries, comprenant
a) une couche de substrat, contenant du polycarbonate,
b) une couche de recouvrement sur au moins une face de la couche de substrat, **caractérisé en ce que** a1) la couche de substrat contient en outre : une combinaison de colorants de structure (1C) 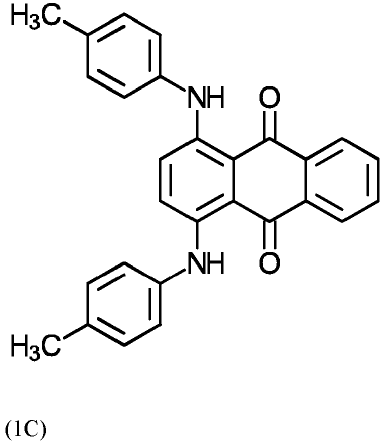 avec au moins un colorant des structures (1H), (1G), (1D) ou (2) 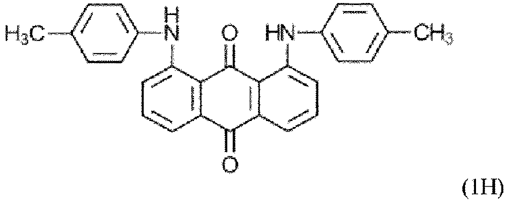 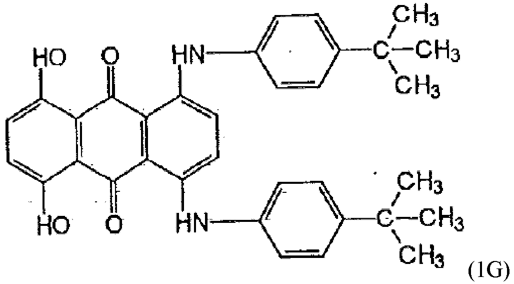 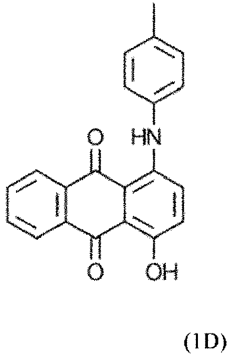 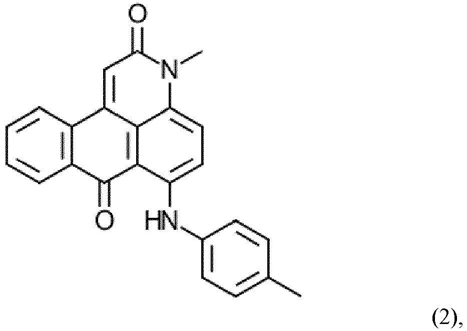
les colorants étant à chaque fois utilisés en des concentrations de 0,02 à 0,2% en poids,
a2) 0,01 % en poids à 1,00% en poids d'un ou de plusieurs agents de démoulage à base d'un ester d'acide gras et
la couche de recouvrement étant constituée d'un revêtement à base de polysiloxane ou à base de polyacrylate ou à base de polyuréthane-acrylate et contenant au moins un absorbant des UV et présentant une épaisseur de couche de 2-15 µm.

2. Corps multicouche selon la revendication 1, **caractérisé en ce que** la couche de substrat est exempte de suie et de colorants à base de périnone.

3. Corps multicouche selon l'une quelconque des revendications précédentes, **caractérisé en ce que** la couche de substrat contient en outre les composants suivants :
a3) au moins un thermostabilisant en une proportion de 0,00% en poids à 0,20% en poids,
a4) au moins un stabilisant de mise en œuvre en une proportion positive inférieure à 0,05% en poids,
a5) au moins un absorbant des UV en une proportion de 0,0 à 20,0% en poids,
a6) au moins un autre additif en une proportion de 0,0 à 5,0% en poids.

4. Corps multicouche selon l'une quelconque des revendications précédentes, **caractérisé en ce que** la couche de substrat contient en outre les composants suivants :
a3) au moins un thermostabilisant en une proportion de 0,01% en poids à 0,10% en poids,
a4) au moins un stabilisant de mise en œuvre en une proportion de 0,00005% en poids à 0,05000% en poids,
a5) au moins un absorbant des UV en une proportion de 0,10 à 1,00% en poids,
a6) au moins un autre additif en une proportion de 0,01 à 1,00% en poids.

5. Corps multicouche selon l'une quelconque des revendications précédentes, **caractérisé en ce que** le polymère thermoplastique de la couche de substrat est un polycarbonate ou un mélange de polycarbonates qui contient des (co)polymères de vinyle ou des polyesters.

6. Corps multicouche selon l'une quelconque des revendications précédentes, **caractérisé en ce que** le composant a4) est le phosphate de triisooctyle.

7. Corps multicouche selon l'une quelconque des revendications précédentes, **caractérisé en ce que** la couche de recouvrement présente une base de polysiloxane.

8. Corps multicouche selon l'une quelconque des revendications précédentes, **caractérisé en ce que** la couche de recouvrement présente une épaisseur de 1,0 à 12,0 µm.

9. Corps multicouche selon l'une quelconque des revendications précédentes, **caractérisé en ce qu'**une couche de recouvrement est disposée sur les deux faces de la couche de substrat.

10. Corps multicouche selon l'une quelconque des revendications précédentes, **caractérisé en ce qu'**une couche d'apprêt est disposée entre la couche de recouvrement et la couche de substrat.

11. Corps multicouche selon l'une quelconque des revendications précédentes, **caractérisé en ce que** la couche d'apprêt présente une épaisseur de 0,3 à 8,0 µm.

12. Procédé pour la fabrication d'un corps multicouche selon l'une quelconque des revendications 1 à 11, **caractérisé en ce qu'**il comprend les étapes suivantes :
- fabrication d'un matériau de substrat, contenant du polycarbonate présentant un MVR (indice de fluidité à chaud en volume) de 7 cm³/(10 min) à 25 cm³/ (10 min) selon la norme ISO 1133 à 300°C et sous une charge de 1,2 kg, contenant
a1) une combinaison de colorants de structure (1C) 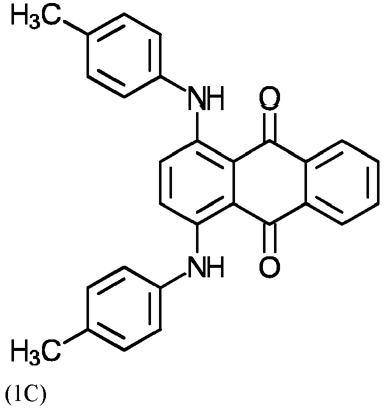 avec au moins un colorant des structures (1H), (1G), (1D) ou (2) 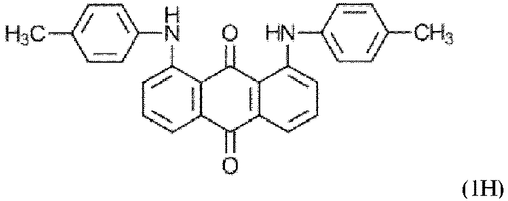 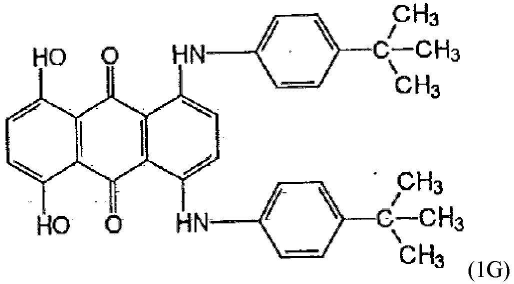 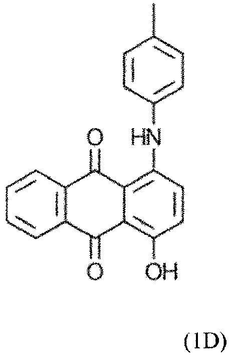 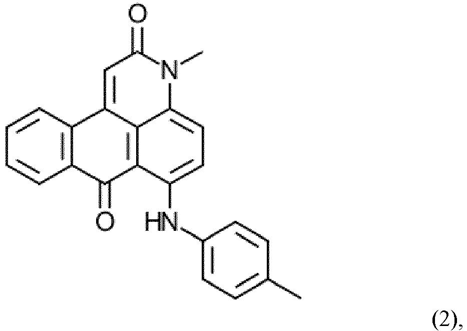
les colorants étant à chaque fois utilisés en des concentrations de 0,02 à 0,2% en poids,
a2) 0,01 % en poids à 1,00% en poids d'un ou de plusieurs agents de démoulage à base d'un ester d'acide gras ainsi qu'éventuellement les composants a3) à a6) ;
- fabrication d'une pièce moulée dans une géométrie particulière de cadre à des températures d'outil élevées ;
- revêtement de la pièce moulée dans un procédé d'immersion par une solution d'apprêt, contenant
a) un liant organique qui favorise l'adhérence entre le polycarbonate et une laque à base de polysiloxane et
b) au moins un absorbant des UV,
c) un solvant à base d'alcool,
- aération de la pièce pendant 10-60 minutes à température ambiante et durcissement pendant 5 minutes à 60 minutes à 100-135°C,
- revêtement de la pièce moulée par une laque de siloxane dans un procédé d'immersion, contenant
a) des composés organosiliciés de formule RₙSi(OX)₄₋ₙ avec n = 1 à 4, R représentant des radicaux aliphatiques en C₁-C₁₀ ainsi que des radicaux aryle et X représentant H, des radicaux aliphatiques en C₁-C₁₀ ainsi que des radicaux aryle ou des produits de condensation partielle de ceux-ci,
b) au moins un composé inorganique finement divisé,
c) un solvant à base d'alcool,
d) au moins un absorbant des UV :
- aération de la pièce pendant 10-60 minutes à température ambiante et durcissement pendant 10 minutes à 120 minutes à 100-140°C.
